# EUROPÄISCHE PATENTSCHRIFT

(11) **EP 3 458 736 B1**
(45) Veröffentlichungstag und Bekanntmachung des Hinweises auf die Patenterteilung: **16.06.2021**
(21) Anmeldenummer: 17726833.1
(22) Anmeldetag: 15.05.2017
(51) Int. Cl.: F16D 48/02

(54) **HYDRAULIKZYLINDER, INSBESONDERE GEBERZYLINDER FÜR EINE HYDRAULISCHE KUPPLUNGS- ODER BREMSBETÄTIGUNG FÜR KRAFTFAHRZEUGE**
HYDRAULIC CYLINDER, IN PARTICULAR MASTER CYLINDER FOR A HYDRAULIC CLUTCH OR BRAKE ACTUATION FOR MOTOR VEHICLES
CYLINDRE HYDRAULIQUE, EN PARTICULIER MAÎTRE-CYLINDRE POUR UN ACTIONNEMENT HYDRAULIQUE D'EMBRAYAGE OU DE FREIN POUR VÉHICULES AUTOMOBILES

(30) Priorität: 18.05.2016 DE 102016006053
(43) Veröffentlichungstag der Anmeldung: 27.03.2019
(73) Patentinhaber: FTE automotive GmbH, 96106 Ebern (DE)
(72) Erfinder: SPERBER, Christian, 96184 Rentweinsdorf (DE); STEINMETZ, Harry, 96106 Ebern (DE); MÜLLER, Karl-Heinz, 96148 Baunach (DE)
(74) Vertreter: Oppermann, Mark
(86) Internationale Anmeldenummer: PCT/EP2017/000587
(87) Internationale Veröffentlichungsnummer: WO 2017/198330

(56) Entgegenhaltungen:
- DE-A1-102011 100 903
- DE-U1-202009 019 022

## Beschreibung

### TECHNISCHES GEBIET

Die vorliegende Erfindung bezieht sich auf einen Hydraulikzylinder gemäß dem Oberbegriff des Patentanspruchs 1. Insbesondere bezieht sich die Erfindung auf einen Geberzylinder für eine hydraulische Kupplungs- oder Bremsbetätigung für Kraftfahrzeuge, wie sie massenweise in der Automobilindustrie zum Einsatz kommen.

### STAND DER TECHNIK

In besagten Geberzylindern wird durch eine axiale Relativverschiebung des Kolbens bezüglich des Zylindergehäuses in einem vom Kolben im Zylindergehäuse begrenzten Druckraum ein hydraulischer Druck erzeugt und ein Volumen an Hydraulikflüssigkeit verschoben. Mit diesem Druck und Volumen wird etwa im Falle einer hydraulischen Kupplungsbetätigung ein mit dem Geberzylinder hydraulisch verbundener Nehmerzylinder beaufschlagt, welcher zum Ausrücken einer Kupplung mit der Kupplung wirkverbunden ist.

Insbesondere bei Kupplungsgeberzylindern finden Sensoranordnungen mit einem zylindergehäusefesten Sensor und einem Magneten als Signalelement am Kolben Verwendung, um den Kolbenhub oder - als Schaltpunkt - eine bestimmte Relativposition zwischen Kolben und Zylindergehäuse zu erfassen. Eine solche Sensierung ermöglicht zum einen eine Aussage über den Verschleißzustand der Kupplung. Zum anderen kann der Ein- bzw. Ausrückzustand der Kupplung ermittelt werden, so dass z.B. bei automatisierten Reibungskupplungen die Kupplungsbetätigung im gewünschten Maße automatisch gesteuert werden kann. Die Ergebnisse der Sensierung können schließlich auch für Sicherheitsvorkehrungen im Betrieb des Kraftfahrzeugs verwendet werden, beispielsweise dafür, dass das Kraftfahrzeug nur dann gestartet werden kann, wenn das Kupplungspedal niedergetreten wird.

Hierbei ist es grundsätzlich bekannt, als Signalelement am Kolben einen Ringmagneten einzusetzen, der mittels eines Sicherungselements (siehe die Druckschrift DE 103 23 797 A1) oder einer Schnappverbindung (vgl. die Druckschrift DE 10 2007 010 835 A1) am Kolben gehalten ist. Solche Ringmagneten sind jedoch relativ groß und aufgrund ihres Volumens verhältnismäßig teuer. Vor diesem Hintergrund wurde bereits vorgeschlagen, einen deutlich kleineren Stabmagneten zu verwenden, der gerichtet im/am Kolben gehalten ist - siehe z.B. die Druckschrift DE 10 2008 063 752 A1 (dort Fig. 5-7: Sensorelement 10). Eine Anforderung hierbei ist, dass der Magnet dauerhaft spielfrei am Kolben angebracht sein muss.

Zur Befestigung eines Stabmagneten am Kolben wurde schon angeregt, den Magneten in einer Aussparung des Kolbens einzukleben (siehe beispielsweise die Druckschrift DE 10 2013 215 078 A1, Fig. 5: Magnet 29). Ein solches Verkleben ist im Fertigungsprozess allerdings nur schwer bzw. nur mit erheblichem Aufwand beherrschbar. Zur Vermeidung einer Klebeverbindung wurde in der Druckschrift DE 10 2014 211 484 A1 bereits vorgeschlagen, den Kolben stirnseitig mit einer Aufnahme für das Sensorelement zu versehen, die mittels eines Deckels verschließbar ist, der reib- oder formschlüssig, d.h. kleberfrei am Kolben befestigt werden kann. Bei diesem Stand der Technik kann in der Aufnahme oder an dem Deckel zusätzlich ein elastisches Element oder ein Federelement vorgesehen sein, über das sich das Sensorelement gegen den Deckel oder den Kolben abstützen kann.

Als weitere Befestigungsmöglichkeit wird im einschlägigen Stand der Technik offenbart, den Stabmagneten im/am Kolben ein- bzw. aufzuspritzen (siehe etwa folgende Druckschriften: DE 39 10 691 C2, Fig. 2: Magnet 20; DE 10 2006 050 525 A1, Fig. 1 und 2: magnetisierbarer oder magnetisierter Bereich M). Diese Befestigungsalternative ist jedoch in mehrfacher Hinsicht problematisch und insofern ausschussanfällig: Zunächst kann es infolge der relativ hohen Temperaturen im Spritzprozess zu einer übermäßigen Entmagnetisierung kommen. Ist die Spritzform magnetisierbar, kann der Magnet "anblocken" und dabei beschädigt werden. Zwar ist auch eine spätere Magnetisierung im ein- bzw. aufgespritzten Zustand denkbar. Die einzelnen Magnete können aber aufgrund ihrer Materialstruktur nur unterschiedlich und somit ggf. auch nur unzureichend magnetisiert werden, was sich vor dem Magnetisieren nicht testen lässt.

Bei Kolben aus Kunststoff wäre es grundsätzlich auch denkbar, beim Spritzen des Kolbens federnde Strukturen für eine Schnappverbindung am Kolben auszubilden, wie dies z.B. aus der oben erwähnten Druckschrift DE 10 2007 010 835 A1 für Ringmagneten bekannt ist. Im Hinblick auf eine Optimierung des Verschleiß- und Geräuschverhaltens des Kolbens kommen indes oft Kunststoffe mit einer Mineralfüllung, wie z.B. PA 6T/6I "Grivory" zum Einsatz, die extrem spröde sind. Bei derartigen Kunststoffen lassen sich Schnapparme od.dgl. am Kolben nicht ausbilden, denn sie würden nicht federn, sondern abbrechen.

In diesem Zusammenhang offenbart die Druckschrift DE 10 2011 100 903 A1 des Weiteren ein hydraulisches Kupplungs- oder Bremsbetätigungssystem mit einem Geberzylinder, einem Nehmerzylinder und einer diese verbindenden Druckleitung, wobei der Geberzylinder ein Gehäuse aufweist, mit einem darin axial beweglichen Kolben, auf dessen Außenseite ein Informationsgeber angebracht ist, der zur Ermöglichung einer Wegmessung des Kolbens mit einer gehäusefesten Sensiereinrichtung in Wirkbeziehung steht. Dabei ist der Informationsgeber in einer axial ausgerichteten Längsnut in einer dem Kolben benachbarten Innenseite des Gehäuses axial beweglich, aber eine Drehung des Kolbens relativ zu dem Gehäuse unterbindend angeordnet, mit der Besonderheit, dass der Informationsgeber radial beweglich und - mittels eines elastischen Materials oder einer Feder - radial nach außen vorgespannt am Kolben angebracht ist.

Aus der den Oberbegriff des Patentanspruchs 1 bildenden Druckschrift DE 20 2009 019 022 U1 ist schließlich ein Hydraulikzylinder mit Informationsgeber bekannt, wobei der Informationsgeber aus einem Informationselement besteht und an einem axial im Gehäuse des Hydraulikzylinders verschiebbaren Kolben befestigt ist. Unter der Zielsetzung, einen Hydraulikzylinder zu schaffen, dessen aus einem Informationselement bestehender Informationsgeber am axial bewegbaren Kolben im Hydraulikzylinder auf einfache Weise befestigbar ist, über diese Befestigung Fertigungstoleranzen ausgeglichen werden und die Positionierung des Informationselements zum Hydraulikzylinder auch im Betriebszustand beibehalten wird, wird bei diesem Stand der Technik vorgeschlagen, das Informationselement mittels einer Positioniervorrichtung im hohlzylindrisch ausgebildeten Gehäuse des Kolbens zu fixieren.

### AUFGABENSTELLUNG

Der Erfindung liegt ausgehend von dem obigen Stand der Technik die Aufgabe zugrunde, einen mittels einer integrierten Sensoranordnung kolbenpositions- und/oder -hubsensierten Hydraulikzylinder, insbesondere Geberzylinder für eine hydraulische Kupplungs- oder Bremsbetätigung zu schaffen, welcher die obigen Nachteile vermeidet und bei dem ein tunlichst kleiner Magnet der Sensoranordnung auf möglichst einfache und kostengünstige Art und Weise exakt positioniert am Kolben des Hydraulikzylinders angebracht ist.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 14.

Bei einem Hydraulikzylinder, insbesondere einem Geberzylinder für eine hydraulische Kupplungs- oder Bremsbetätigung für Kraftfahrzeuge, der ein Zylindergehäuse hat, in dem ein Kolben in einer Axialrichtung verschiebbar geführt ist, um einen Druckraum variabel zu begrenzen, wobei zur Erfassung einer Position und/oder eines Hubs des Kolbens in der Axialrichtung eine Sensoranordnung mit einem zylindergehäusefesten Sensor und einem damit zusammenwirkenden, am Kolben gehaltenen, stabartigen Magneten vorgesehen ist; ist erfindungsgemäß am Kolben ein Sicherungselement befestigt, das den Magneten sowohl in der Axialrichtung gegen eine am Kolben ausgebildete Anlagefläche als auch in einer Richtung quer zur Axialrichtung gegen eine ebenfalls am Kolben ausgebildete weitere Anlagefläche federnd vorspannt, so dass der Magnet in der Axialrichtung und auch in der Richtung quer zur Axialrichtung spielfrei am Kolben gehalten ist.

Dadurch, dass der Magnet mittels des am Kolben angebrachten Sicherungselements am Kolben gehalten ist, entfallen zunächst prozesstechnisch ggf. problematische Klebe- oder Ein- bzw. Aufspritzvorgänge zur Befestigung des Magneten am Kolben. Weder ist - wie bei einem Klebevorgang - mit irgendwelchen Dosier- oder Vorratshaltungsproblemen zu rechnen, die Ergebnisse von "gar nicht kleben" (weil z.B. der Klebstoff eingetrocknet ist) bis "zu viel kleben" (mit etwa Verunreinigungen am Kolben oder später im Zylindergehäuse) zeitigen können, noch besteht die Gefahr - wie bei einem Spritzprozess - einer thermischen Veränderung des Magneten bzw. dessen Eigenschaften. Der Magnet kann problemlos magnetisiert und/oder im Hinblick auf seine magnetischen Eigenschaften getestet werden bevor er unter Zuhilfenahme des Sicherungselements in montagefreundlicher und prozesssicherer Weise am Kolben angebracht wird, was die Eigenschaften des Magneten dann nicht berührt.

Zugleich sorgt das Sicherungselement für eine Unabhängigkeit im Kolbenmaterial, d.h. es sind beliebige Kolbenmaterialien einsetzbar, etwa die vorerwähnten, extrem spröden Kunststoffe. Für die Festlegung notwendige Elastizitäten können dann dem Sicherungselement zugeordnet werden, welches aus einem vom Kolbenmaterial verschiedenen Material bestehen kann.

Weil der Magnet ferner über das Sicherungselement gegen die am Kolben vorgesehene Anlagefläche in der Axialrichtung federnd vorgespannt und damit in der Axialrichtung ohne Spiel am Kolben gehalten ist, "beginnt" der Magnet während eines Hubs oder Rückhubs des Kolbens im Zylindergehäuse für den Sensor der Sensoranordnung stets an ein und derselben Stelle des Kolbens, was für eine hohe Erfassungsgenauigkeit durch die Sensoranordnung sorgt. Weitere Vorteile ergeben sich hier daraus, dass aufgrund der elastischen Eigenschaften des Sicherungselements und dessen Vermögen, den Magneten an die zugeordnete Anlagefläche des Kolbens federnd anzudrücken, Toleranzen am Magneten "federnd überbrückt" werden. Somit müssen die einzelnen Magnete abmessungsmäßig nicht eng toleriert werden, was insbesondere Kostenvorteile mit sich bringt.

Des Weiteren ermöglicht die erfindungsgemäße, genaue Positionierung des Magneten am Kolben mittels der vom Sicherungselement erzeugten Federvorspannung die Verwendung von im Verhältnis kleinen Magneten, insbesondere sehr schlanken Stabmagneten.

Da schließlich der Magnet mittels des Sicherungselements zudem gegen eine am Kolben ausgebildete weitere Anlagefläche in einer Richtung quer zur Axialrichtung federnd vorgespannt und somit auch in der Richtung quer zur Axialrichtung spielfrei gehalten ist, kann der Magnet - in einer axialen Projektion gesehen - zum Sensor der Sensoranordnung unabhängig von der Hubposition des Kolbens im Zylindergehäuse vorteilhaft stets denselben, knappen radialen Abstand aufweisen. Diese Maßnahme ermöglicht die Verwendung eines besonders kleinen Magneten mit im Verhältnis geringer Feldstärke, bei dennoch großer Genauigkeit und hoher Signalgüte der Erfassung durch den Sensor der Sensoranordnung.

Insbesondere im Hinblick auf einen geringen axialen Bauraumbedarf der Lösung bevorzugt ist es, wenn das Sicherungselement einen Andruckfederarm aufweist, der sich im Wesentlichen in der Richtung quer zur Axialrichtung erstreckt und eine dem Magneten zugewandte Andruckfläche besitzt, über die der Magnet in der Axialrichtung gegen die Anlagefläche andrückbar ist.

In zweckmäßiger Ausgestaltung kann das Sicherungselement ferner einen weiteren Andruckfederarm aufweisen, der sich im Wesentlichen in der Axialrichtung erstreckt und eine dem Magneten zugewandte weitere Andruckfläche besitzt, über die der Magnet in der Richtung quer zur Axialrichtung gegen die weitere Anlagefläche andrückbar ist.

Grundsätzlich ist es möglich, das Sicherungselement mittels z.B. einer Schraubverbindung öder einer Schweißverbindung am Kolben zu befestigen. Im Hinblick auf insbesondere eine einfache Montage bevorzugt ist es indes, wenn das Sicherungselement mittels einer Schnappverbindung am Kolben befestigt ist. Eine solche formschlüssige Verbindung, die zum Fügen stets etwas Spiel benötigt, kann infolge der mittels des Sicherungselements bewirkten federnden Vorspannung des Magneten gegen den Kolben ohne Probleme sicher ausgestaltet werden. Hierbei kann das Sicherungselement zweckmäßig mindestens einen Befestigungsfederarm aufweisen, der mit einer Rastnase versehen ist, die zur Ausbildung der Schnappverbindung in einer zugeordneten Öffnung des Kolbens eingreift.

Ist dabei die Anordnung der Elemente bevorzugt so getroffen, dass der mindestens eine Befestigungsfederarm des Sicherungselements im Wesentlichen in einer Richtung federnd ausgebildet ist, die senkrecht zu sowohl der Axialrichtung, in welcher der Andruckfederarm wirkt, als auch der Richtung quer zur Axialrichtung, in welcher der weitere Andruckfederarm wirkt, verläuft, baut das Sicherungselement nicht nur besonders kompakt, sondern ist auch kräftemäßig dahingehend optimiert, dass sich die durch das Sicherungselement bewirkten Vorspannkräfte einerseits und die Befestigungskräfte am Sicherungselement andererseits nicht gegenseitig beeinflussen.

Insbesondere im Hinblick auf eine hohe Toleranzarmut und geringe Bauteilabmessungen bevorzugt ist es ferner, wenn der Kolben zur Aufnahme sowohl des Magneten als auch des Sicherungselements eine Aussparung aufweist, in der die Anlagefläche und die weitere Anlagefläche für den Magneten sowie die Öffnung, in der die Rastnase des mindestens einen Befestigungsfederarms eingreift, ausgebildet sind, wobei das Sicherungselement hauptsächlich auf der vom Sensor abgewandten Seite des Magneten angeordnet ist, was wiederum auch für eine große Nähe des Magneten zum Sensor sorgt.

In besonders kompakter Ausgestaltung kann weiterhin das Sicherungselement in der Art eines Winkels ausgebildet sein, mit einem im Wesentlichen quaderförmigen Grundkörper, von dem sich an einer Querseite der Andruckfederarm im Wesentlichen senkrecht wegerstreckt, wobei der weitere Andruckfederarm an zentraler Stelle des Grundkörpers ausgeformt ist, während an zwei Längsseiten des Grundkörpers je ein Befestigungsfederarm der Schnappverbindung ausgebildet ist. Eine solche Geometrie lässt sich problemlos durch Spritzgießen aus einem geeignet elastischen Kunststoff herstellen.

Für eine einfache, ggf. teil- oder vollautomatisierte Montage von Magnet und Sicherungselement am Kolben kann das Sicherungselement ferner einen Handhabungsabschnitt besitzen, der sich vorzugsweise an der Querseite des Grundkörpers im Wesentlichen senkrecht zum Grundkörper in einer zur Erstreckungsrichtung des Andruckfederarms entgegengesetzten Richtung wegerstreckt.

Bei einer bevorzugten Ausgestaltung des Hydraulikzylinders, bei der das Zylindergehäuse einen den Druckraum begrenzenden Gehäusegrundkörper und einen Gehäuseeinsatz umfasst, über den der Kolben im Zylindergehäuse längsverschieblich geführt und gegen ein Verdrehen gesichert ist, ist der Gehäuseeinsatz des Weiteren vorzugsweise mittels einer Bajonettverbindung dreh- und axialfest in einem Aufnahmeabschnitt des Gehäusegrundkörpers befestigt, der sich ausgehend von einem offenen Ende des Gehäusegrundkörpers in Richtung des Druckraums erstreckt. Eine solche formschlüssige Verbindung ist - verglichen zu einer ebenfalls denkbaren Schweißverbindung zwischen Gehäuseeinsatz und Gehäusegrundkörper - sehr einfach zu montieren. Auch hat diese Bajonettverbindung - im Vergleich zu einer prinzipiell möglichen Schnappverbindung zwischen Gehäuseeinsatz und Gehäusegrundkörper, wie sie im oben erwähnten Stand der Technik gemäß der Druckschrift DE 10 2007 010 835 A1 offenbart ist - den Vorteil, dass kein zusätzlicher axialer Montageweg vorzusehen ist, um die Verbindungselemente miteinander in Eingriff zu bringen. Dies wiederum ist einer kurzen Baulänge und geringer Toleranzen in der Maßkette vom Magneten zum Sensor förderlich.

In besonders einfacher und leicht abzudichtender Ausgestaltung des Hydraulikzylinders kann hierbei der Kolben an seinem vom Druckraum abgewandten Ende einen radial vorstehenden Ausrichtungsfortsatz zur Drehwinkelorientierung im Zylindergehäuse aufweisen, der in einer im Gehäuseeinsatz ausgebildeten Axialnut eng, d.h. im Wesentlichen spielfrei geführt ist.

Vorzugsweise ist die Anordnung weiterhin so getroffen, dass zur Ausbildung der Bajonettverbindung der Gehäuseeinsatz radial vorstehende Kragenabschnitte hat, während der Aufnahmeabschnitt für den Gehäuseeinsatz im Gehäusegrundkörper Fügeaussparungen und zur engen Aufnahme der Kragenabschnitte ausgebildete Hinterschneidungen aufweist, wobei die Fügeaussparungen zum Einführen der Kragenabschnitte von dem offenen Ende des Gehäusegrundkörpers ausgehen und die Hinterschneidungen mit axialem Abstand zum offenen Ende zu den Fügeaussparungen winkelversetzt angeordnet sind, so dass die über die Fügeaussparungen eingeführten Kragenabschnitte durch Verdrehen des Gehäuseeinsatzes im Gehäusegrundkörper in die Hinterschneidungen verschwenkbar sind, um den Gehäuseeinsatz im Gehäusegrundkörper axial festzulegen. Eine umgekehrte Anordnung, mit Kragenabschnitten am Gehäusegrundkörper und Fügeaussparungen sowie Hinterschneidungen am Gehäuseeinsatz ist zwar ebenfalls denkbar, diese wäre allerdings deutlich aufwändiger herzustellen.

Ferner ist es bevorzugt, wenn der Gehäusegrundkörper an seinem offenen Ende eine stirnseitige Kontur mit mindestens einem auf einen Rampenabschnitt in Umfangsrichtung folgenden Rastabschnitt aufweist, während der Gehäuseeinsatz an seinem vom Druckraum abgewandten Ende mindestens einen radial vorstehenden, in Axialrichtung federnden Arm hat, der bei der Montage des Gehäuseeinsatzes zum Gehäusegrundkörper an der stirnseitigen Kontur zur Anlage bringbar ist, worauf der federnde Arm durch Verdrehen des Gehäuseeinsatzes im Gehäusegrundkörper über den Rampenabschnitt vorspannbar und nach Überfahren des Rampenabschnitts im Rastabschnitt einrastbar ist, um die Bajonettverbindung mit im Gehäusegrundkörper drehwinkelorientiertem Gehäuseeinsatz zu verriegeln. In dieser Ausgestaltung lässt sich die Bajonettverbindung besonders prozesssicher fügen, mit durch die Verrastung bewirkter, deutlicher Anzeige wie auch sicherer Aufrechterhaltung des gefügten Zustands. Hierbei erfolgt nicht nur eine präzise Drehwinkelorientierung des Gehäuseeinsatzes zum Gehäusegrundkörper und folglich des am geführten Kolben gehaltenen Magneten zum zylindergehäusefesten Sensor der Sensoranordnung, sondern auch eine Überdrückung eines ggf. vorhandenen axialen Restspiels zwischen Gehäuseeinsatz und Gehäusegrundkörper durch die axial vorspannenden federnden Arme am Gehäuseeinsatz. Dies alles ist ebenfalls einer besonders präzisen Sensierung der Kolbenposition im Zylindergehäuse förderlich.

Schließlich ist es bei einem Sensor, der eine Sensorplatine mit einem darauf angeordneten Sensorelement - wie z.B. einem Hallelement - aufweist, besonders bevorzugt, wenn das Zylindergehäuse zur exakt positionierten Aufnahme der Sensorplatine mit einer Aussparung versehen ist, die mittels eines Deckels dicht verschlossen ist, durch den hindurch eine elektrische Kontaktierung der Sensorplatine erfolgt. Aus dieser Weiterbildung ergeben sich insbesondere noch die folgenden Vorteile: eine genaue axiale und radiale Positionierung des Sensors am Zylindergehäuse ist leicht möglich; Klipse od.dgl. sind hierbei entbehrlich; im Unterschied zu am Zylindergehäuse ein- bzw. angeklipsten, separaten Sensorgehäusen - die ebenfalls grundsätzlich denkbar sind - gibt es zudem eine Gehäusewandung weniger, wodurch sich der Abstand zwischen dem Magneten und dem Sensor reduziert, so dass das Magnetfeld besser ausgewertet und der Magnet nochmals kleiner dimensioniert werden kann.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise schematischen Zeichnungen näher erläutert, in denen zur Vereinfachung der Darstellung elastomere bzw. elastische Teile im unverformten Zustand dargestellt sind. In den Zeichnungen zeigen:
- Fig. 1: eine Vorderansicht eines Geberzylinders für eine hydraulische Kupplungsbetätigung für Kraftfahrzeuge nach einem bevorzugten Ausführungsbeispiel der Erfindung im nicht montierten Zustand, ohne Kolbenstange;
- Fig. 2: eine Schnittansicht des Geberzylinders gemäß Fig. 1 entsprechend der Schnittverlaufslinie II-II in Fig. 1, mit einem in einem Zylindergehäuse längsverschieblichen Kolben, der in einem Gehäuseeinsatz des Zylindergehäuses geführt ist und eine Aussparung besitzt, in der ein Magnet einer Sensoranordnung zur Huberfassung des Kolbens mittels eines Sicherungselements festgelegt ist;
- Fig. 3: eine im Maßstab gegenüber der Fig. 2 vergrößerte Schnittansicht des Geberzylinders gemäß Fig. 1 entsprechend dem Detailkreis III in Fig. 2, zur besseren Illustration der Festlegung des Magneten in der Aussparung des Kolbens unter Zuhilfenahme des Sicherungselements;
- Fig. 4: eine abgebrochene Schnittansicht des Geberzylinders gemäß Fig. 1 entsprechend der Schnittverlaufslinie IV-IV in Fig. 3, zur Veranschaulichung der Festlegung des Magneten in der Aussparung des Kolbens in radialer Richtung;
- Fig. 5: eine abgebrochene Schnittansicht des Geberzylinders gemäß Fig. 1 entsprechend der Schnittverlaufslinie V-V in Fig. 3, zur Darstellung einer Verrastung des Sicherungselements am Kolben;
- Fig. 6: eine abgebrochene Schnittansicht des Geberzylinders gemäß Fig. 1 entsprechend der Schnittverlaufslinie VI-VI in Fig. 3, zur Illustration der Festlegung des Magneten in der Aussparung des Kolbens in axialer Richtung;
- Fig. 7: eine perspektivische Explosionsdarstellung zum Kolben des Geberzylinders gemäß Fig. 1, der hinter der Aussparung zur Aufnahme des Magneten abgebrochen gezeigt ist, mit dem Magneten und dem Sicherungselement vor der Montage des Magneten in der Aussparung des Kolbens;
- Fig. 8: eine perspektivische Ansicht des Kolbens des Geberzylinders gemäß Fig. 1 entsprechend der Darstellung in Fig. 7, wobei der Magnet und das Sicherungselement in der Aussparung des Kolbens montiert sind;
- Fig. 9: eine perspektivische Ansicht des Kolbens des Geberzylinders gemäß Fig. 1 von schräg oben/hinten mit Blick auf die Aussparung zur Aufnahme des Magneten;
- Fig. 10: eine Seitenansicht des Kolbens gemäß Fig. 9;
- Fig. 11: eine Rückansicht des Kolbens gemäß Fig. 9;
- Fig. 12: eine Schnittansicht des Kolbens gemäß Fig. 9 entsprechend der Schnittverlaufslinie XII-XII in Fig. 11;
- Fig. 13: eine gegenüber dem Maßstab von Fig. 2 deutlich vergrößerte, perspektivische Ansicht des Sicherungselements des Geberzylinders gemäß Fig. 1 von schräg unten/ vorne;
- Fig. 14: eine Draufsicht auf das Sicherungselement gemäß Fig. 13;
- Fig. 15: eine Schnittansicht des Sicherungselements gemäß Fig. 13 entsprechend der Schnittverlaufslinie XV-XV in Fig. 14;
- Fig. 16: eine Vorderansicht des Sicherungselements gemäß Fig. 13;
- Fig. 17: eine perspektivische Ansicht des Gehäuseeinsatzes des Zylindergehäuses des Geberzylinders gemäß Fig. 1 von schräg hinten/unten, mit Blick auf eine Axialnut zur Drehwinkelorientierung des Kolbens im Zylindergehäuse;
- Fig. 18: eine Seitenansicht des Gehäuseeinsatzes gemäß Fig. 17;
- Fig. 19: eine Rückansicht des Gehäuseeinsatzes gemäß Fig. 17;
- Fig. 20: eine Vorderansicht des Gehäuseeinsatzes gemäß Fig. 17;
- Fig. 21: eine Schnittansicht des Gehäuseeinsatzes gemäß Fig. 17 entsprechend der Schnittverlaufslinie XXI-XXI in Fig. 20;
- Fig. 22: eine nach hinten abgebrochene, perspektivische Ansicht eines Gehäusegrundkörpers des Zylindergehäuses des Geberzylinders gemäß Fig. 1 von schräg oben/vorne, zur Darstellung der Aufnahme-/Befestigungssituation für den Gehäuseeinsatz gemäß Fig. 17 im Gehäusegrundkörper;
- Fig. 23: eine hinsichtlich Blickwinkel und Darstellungsweise der Fig. 22 entsprechende perspektivische Ansicht des Gehäusegrundkörpers gemäß Fig. 22, wobei der Gehäuseeinsatz bei seiner Montage in einer drehwinkelorientierten Zwischenposition zum axialen Fügen zum Gehäusegrundkörper gezeigt ist;
- Fig. 24: eine hinsichtlich Blickwinkel und Darstellungsweise der Fig. 22 entsprechende perspektivische Ansicht des Gehäusegrundkörpers gemäß Fig. 22, wobei der Gehäuseeinsatz bei seiner Montage in einer weiteren Zwischenposition gezeigt ist, in der er zum Gehäusegrundkörper axial gefügt ist;
- Fig. 25: eine hinsichtlich Blickwinkel und Darstellungsweise der Fig. 22 entsprechende perspektivische Ansicht des Gehäusegrundkörpers gemäß Fig. 22, wobei der Gehäuseeinsatz in seiner gegenüber der Lage von Fig. 24 im Uhrzeigersinn verdrehten Endposition im Gehäusegrundkörper gezeigt ist, in der der Gehäuseeinsatz mit dem Gehäusegrundkörper verrastet ist;
- Fig. 26: eine im Maßstab gegenüber der Fig. 1 vergrößerte Vorderansicht des Geberzylinders gemäß Fig. 1 entsprechend dem Detailkreis XXVI in Fig. 1, zur weiteren Illustration der Verrastung des Gehäuseeinsatzes nach Fig. 17 im Gehäusegrundkörper gemäß Fig. 22; und
- Fig. 27: eine im Maßstab gegenüber der Fig. 2 vergrößerte Schnittansicht des Geberzylinders gemäß Fig. 1 entsprechend dem Detailkreis XXVII in Fig. 2, zur weiteren Illustration der Verrastung des Gehäuseeinsatzes nach Fig. 17 im Gehäusegrundkörper gemäß Fig. 22.

### DETAILLIERTE BESCHREIBUNG DES AUSFÜHRUNGSBEISPIELS

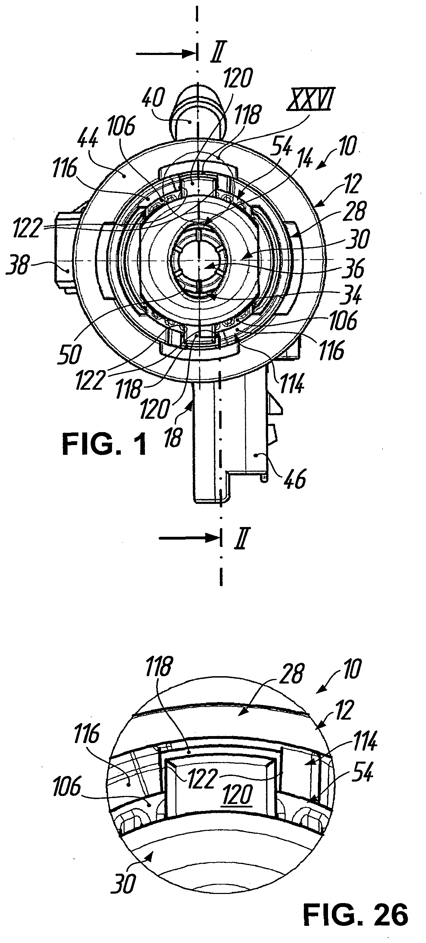

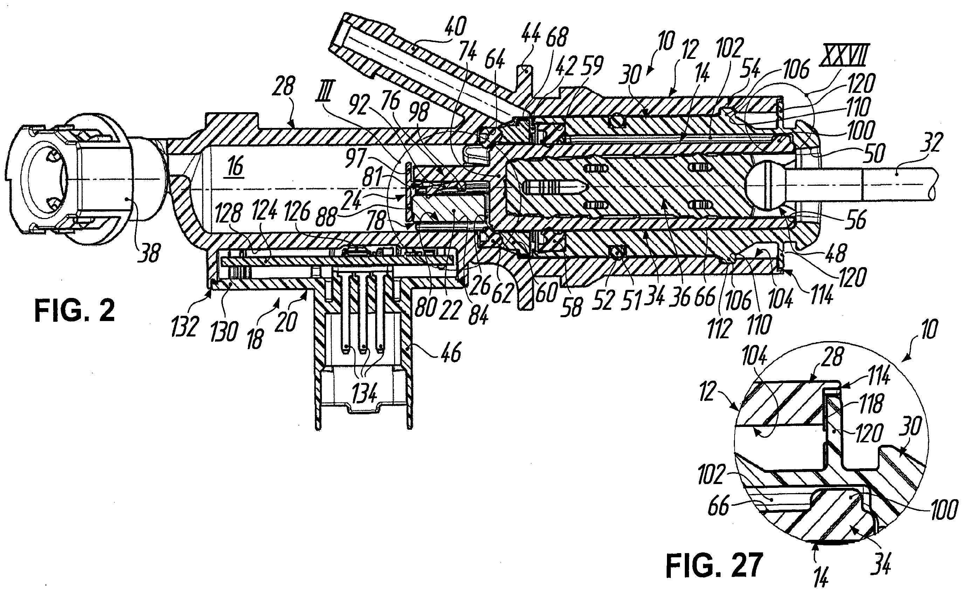

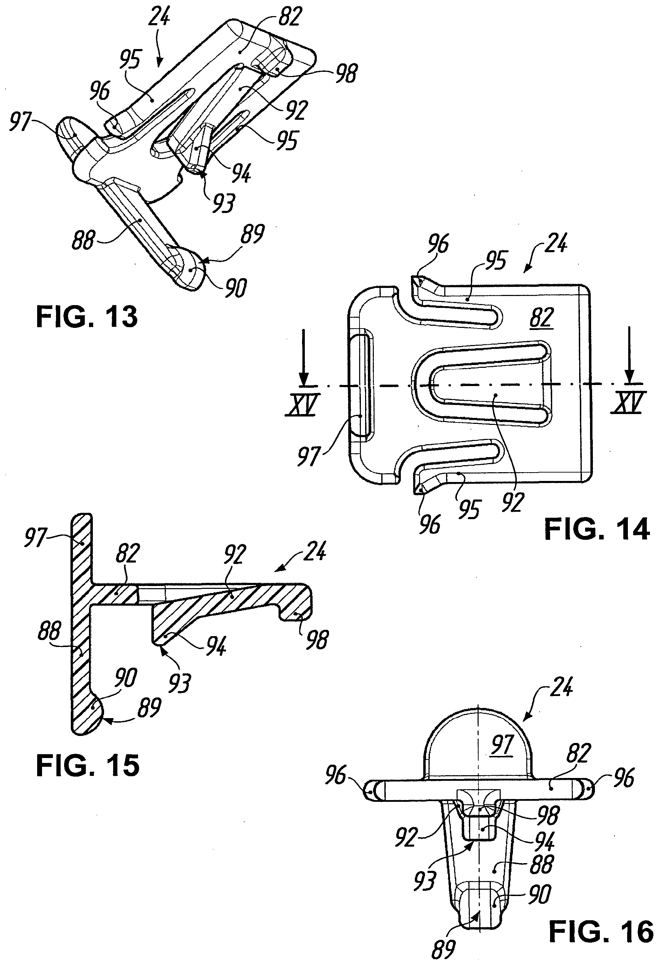

In den Fig. 1 und 2 ist beispielhaft für einen Hydraulikzylinder ein Geberzylinder für eine hydraulische Kupplungsbetätigung für Kraftfahrzeuge allgemein mit dem Bezugszeichen 10 beziffert. Der im nicht angeschlossenen, unbetätigten Zustand gezeigte Geberzylinder 10 hat ein Zylindergehäuse 12, in dem ein Kolben 14 in einer Axialrichtung verschiebbar geführt ist, um im Zylindergehäuse 12 einen Druckraum 16 variabel zu begrenzen. Zur Erfassung einer Position und/oder eines Hubs des Kolbens 14 in der Axialrichtung ist eine Sensoranordnung 18 vorgesehen, die einen zylindergehäusefesten Sensor 20 und einen damit zusammenwirkenden, am Kolben 14 gehaltenen, stabartigen Magneten 22 als Signalelement der Sensoranordnung 18 umfasst. Ein wesentliches Merkmal besteht darin, dass, wie nachfolgend noch näher erläutert werden wird, der Magnet 22 mittels eines am Kolben 14 befestigten, in den Fig. 13 bis 16 separat gezeigten Sicherungselements 24 gegen eine am Kolben 14 ausgebildete Anlagefläche 26 in der Axialrichtung federnd vorgespannt und somit insbesondere in der Axialrichtung spielfrei gehalten ist.

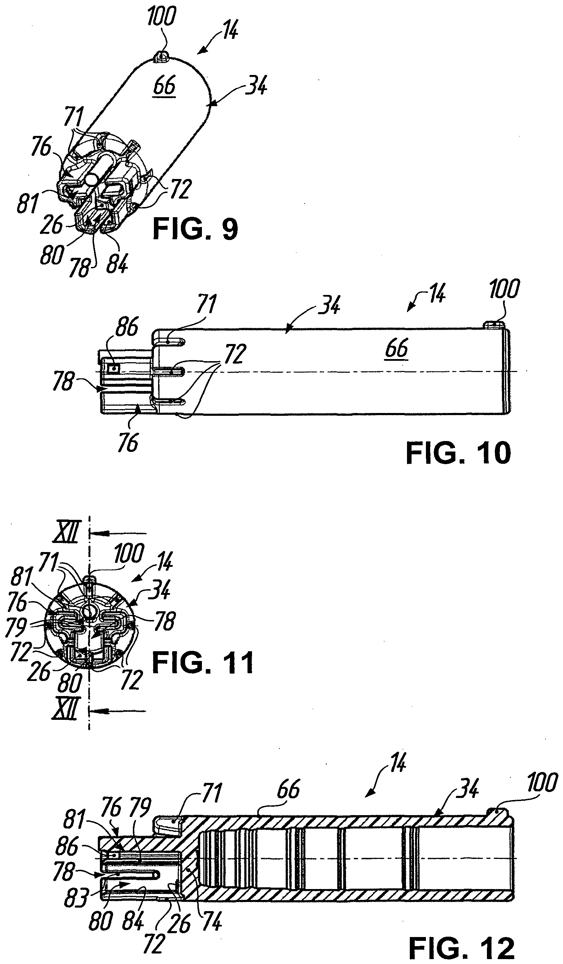

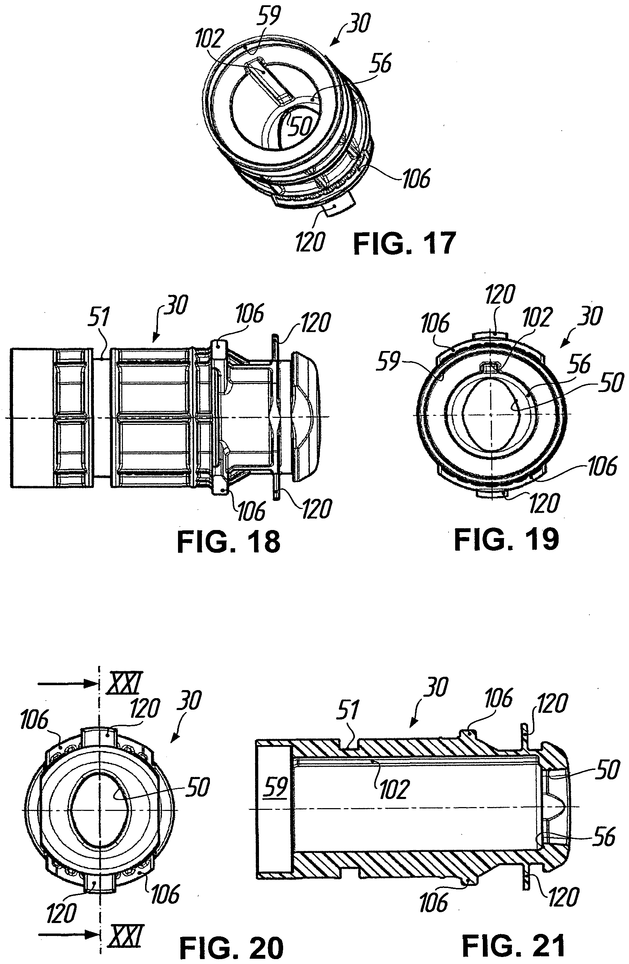

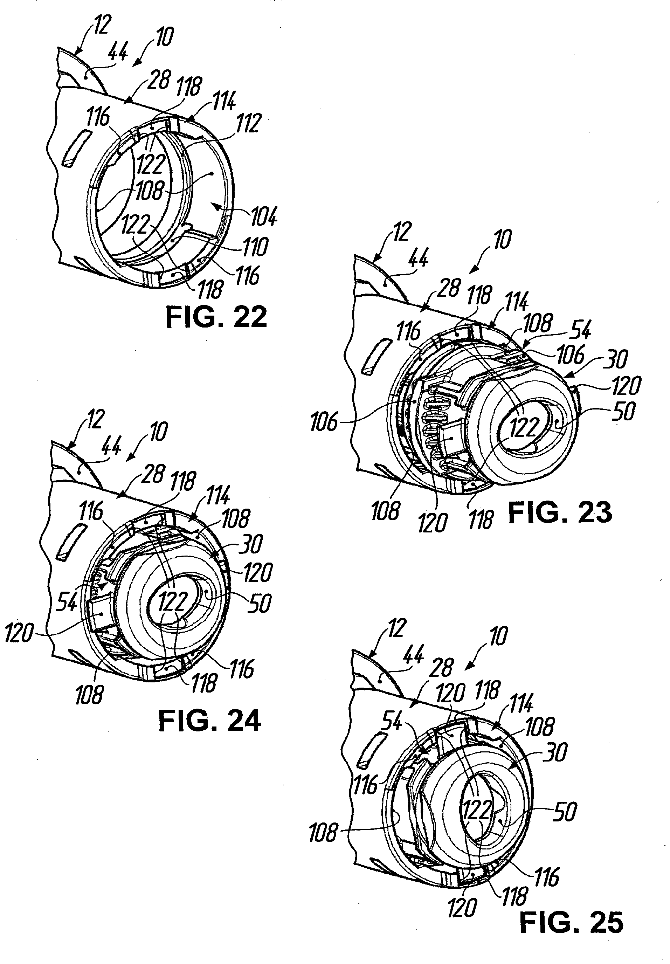

Das Zylindergehäuse 12 des Geberzylinders 10 ist zweiteilig aus Kunststoff ausgebildet und umfasst allgemein einen hohlen, den Druckraum 16 begrenzenden Gehäusegrundkörper 28 und einen darin auf besondere, anhand der Fig. 22 bis 25 noch zu beschreibende Art und Weise eingesetzten, in den Fig. 17 bis 21 einzeln dargestellten Gehäuseeinsatz 30, über den der Kolben 14 auf ebenfalls noch zu beschreibende Art und Weise im Zylindergehäuse 12 längsverschieblich geführt und gegen ein Verdrehen gesichert ist. Auch der über eine aus dem Zylindergehäuse 12 vorstehende Kolbenstange 32 betätigbare Kolben 14 ist mehrteilig aus Kunststoff spritzgegossen, mit einem in den Fig. 9 bis 12 separat gezeigten, im Wesentlichen becherförmigen Kolbenaußenteil 34, das in dem Zylindergehäuse 12 den Druckraum 16 variabel begrenzt, und einem Kolbeninnenteil 36, das im Kolbenaußenteil 34 wie in der eingangs erwähnten Druckschrift DE 10 2007 010 835 A1 im Einzelnen beschrieben formschlüssig befestigt und mit der Kolbenstange 32 wirkverbunden ist.

Gemäß den Fig. 1 und 2 ist das Zylindergehäuse 12, genauer dessen Gehäusegrundkörper 28 an seinem in Fig. 2 linken Ende mit einem Druckanschluss 38 versehen, der mit dem Druckraum 16 kommuniziert und über den der Geberzylinder 10 auf an sich bekannte Weise mit einem Nehmerzylinder (nicht dargestellt) hydraulisch verbunden werden kann. Der Gehäusegrundkörper 28 weist ferner einen Nachlaufanschluss 40 auf, der mit einem Nachlaufbereich 42 (siehe Fig. 2) im Zylindergehäuse 12 kommuniziert und über den der Geberzylinder 10 ebenfalls auf an sich bekannte Weise mit einem Nachlaufbehälter (nicht gezeigt) hydraulisch verbunden werden kann. In den Fig. 1 und 2 ist am Zylindergehäuse 12 ferner ein Befestigungsflansch 44 zu erkennen, mittels dessen der Geberzylinder 10 an einer Spritzwand (nicht dargestellt) im Kraftfahrzeug montiert werden kann, sowie ein am Zylindergehäuse 12 integrierter Elektroanschluss 46 für den Sensor 20 der Sensoranordnung 18. An dem in Fig. 2 rechten Ende des Gehäuseeinsatzes 30 schließlich ragt die am Kolbeninnenteil 36 mittels einer Kugelgelenkverbindung 48 angelenkte Kolbenstange 32 aus einer ovalen Öffnung 50 (vgl. die Fig. 1, 19, 20 und 23 bis 25) des Gehäuseeinsatzes 30 heraus, die eine gewisse Winkelauslenkung der Kolbenstange 32 bezüglich der Mittelachse des Kolbens 14 ermöglicht.

Weitere Einzelheiten zum Inneren des Geberzylinders 10 sind insbesondere der Fig. 2 zu entnehmen. Demgemäß ist zunächst der mittels eines in einer Radialnut 51 des Gehäuseeinsatzes 30 aufgenommenen O-Rings 52 gegenüber dem Gehäusegrundkörper 28 statisch abgedichtete Gehäuseeinsatz 30 durch eine allgemein mit 54 bezifferte Bajonettverbindung im Gehäusegrundkörper 28 gehalten, wie noch näher erläutert werden wird. Eine innenumfangsseitige Ringschulter 56 am in Fig. 2 rechten Ende des Gehäuseeinsatzes 30 bildet einen Anschlag für den Kolben 14 aus. Am in Fig. 2 linken Ende des Gehäuseeinsatzes 30 ist dieser zur Aufnahme eines elastomeren Sekundärdichtelements 58 bei 59 ringförmig ausgespart. Zwischen dem Gehäusegrundkörper 28 und dem Gehäuseeinsatz 30 ist ein Stützring 60 angeordnet, der das Sekundärdichtelement 58 von einem Primärdichtelement 62 trennt, welches seinerseits in einer zugeordneten Ringaussparung 64 des Gehäusegrundkörpers 28 sitzt.

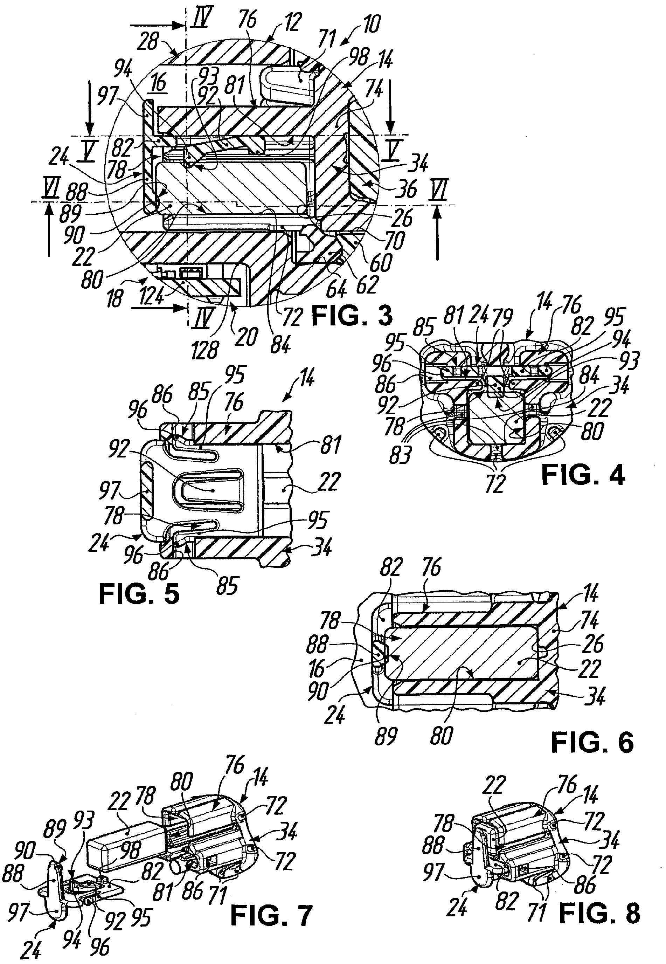

Das Primärdichtelement 62 dichtet in einer nicht dargestellten Betriebsstellung des Kolbens 14, in der es sich über einer zylindrischen Lauffläche 66 am Außenumfang des Kolbenaußenteils 34 befindet, den Druckraum 16 gegenüber dem sich zwischen dem Primärdichtelement 62 und dem Sekundärdichtelement 58 befindenden Nachlaufbereich 42 ab, so dass im Druckraum 16 infolge eines Hubs des Kolbens 14 nach links in Fig. 2 ein Druck aufgebaut werden kann. Am Stützring 60 über dessen Umfang verteilt vorgesehene Stirnnuten 68 (siehe Fig. 2) und Axialnuten 70 (vgl. Fig. 3) bilden zusammen mit außerhalb der Lauffläche 66 liegenden, ebenfalls über den Umfang verteilten Schlitzen 71 und Axialnuten 72 (siehe insbesondere die Fig. 9 bis 12) am druckraumseitigen Ende des Kolbenaußenteils 34 eine Nachlaufeinrichtung. Die Nachlaufeinrichtung verbindet in der in Fig. 2 gezeigten Grundstellung des Kolbens 14 den Druckraum 16 unter der Dichtkontur des Primärdichtelements 62 hinweg mit dem Nachlaufbereich 42, um einen Druckausgleich zwischen dem Druckraum 16 und dem Nachlaufbereich 42 zu schaffen, einen Nachlauf von Hydraulikflüssigkeit vom Nachlaufbereich 42 in den Druckraum 16 zu gestatten und ggf. ein Entweichen von Luft aus dem Druckraum 16 über den Nachlaufbereich 42 zu ermöglichen. Das Sekundärdichtelement 58 schließlich liegt mit seiner Dichtkontur stets an der Lauffläche 66 des Kolbens 14 an, um den Nachlaufbereich 42 zur Atmosphäre bzw. Umgebung hin abzudichten.

Gemäß den Fig. 2 und 3 bis 12 schließt sich an einen druckraumseitigen Boden 74 des Kolbenaußenteils 34 in Richtung des Druckraums 16 ein Kolbenfortsatz 76 an, der im dargestellten Ausführungsbeispiel zusammen mit dem Sicherungselement 24 der Befestigung des stabartigen Magneten 22 am Kolben 14 dient. Hierzu weist der Kolben 14 im Bereich des Kolbenfortsatzes 76 eine zum Druckraum 16 hin offene Aussparung 78 auf, die zur Aufnahme sowohl des Magneten 22 als auch des Sicherungselements 24 dient. Die Aussparung 78 ist durch zwei gegenüberliegende, sich in der Axialrichtung erstreckende Stege 79 (siehe die Fig. 4, 11 und 12) in einen Aufnahmebereich 80 für den Magneten 22, der im Querschnitt gesehen (vgl. die Fig. 4) im Wesentlichen komplementär zum Magneten 22 geformt ist, und einen Aufnahmebereich 81 für einen im Wesentlichen quaderförmigen Grundkörper 82 des Sicherungselements 24 unterteilt. Im dargestellten Ausführungsbeispiel ist der aus einem Ferritmaterial bestehende Magnet 22 ebenfalls im Wesentlichen quaderförmig; den jeweiligen Erfassungserfordernissen und Zylindergehäuse-Durchmessern entsprechend kann der Magnet aber auch eine andere Geometrie aufweisen, z.B. die Form eines einseitig abgeflachten Zylinders besitzen, dessen abgeflachte Seite dem Sicherungselement zugewandt ist (nicht gezeigt). Auch in einem solchen Fall hat der Magnet einen Querschnitt, der sich in Längserstreckungsrichtung des Magneten nicht verändert.

In dem gemäß Fig. 4 bei 83 dreifach längsgeschlitzten Aufnahmebereich 80 der Aussparung 78 ist angrenzend an den Boden 74 des Kolbenaußenteils 34 die vorerwähnte Anlagefläche 26 für den Magneten 22 ausgebildet, an der sich der Magnet 22 in der Axialrichtung abzustützen vermag. Der Magnet 22 ist mittels des Sicherungselements 24 auch gegen eine am Kolben 14 ausgebildete weitere Anlagefläche 84 in einer Richtung quer zur Axialrichtung, d.h. in radialer Richtung federnd vorgespannt und somit ebenfalls in der Richtung quer zur Axialrichtung spielfrei gehalten. Diese weitere Anlagefläche 84 ist gemäß insbesondere den Fig. 2 bis 4, 9 und 12 auch im Aufnahmebereich 80 der Aussparung 78 ausgebildet.

Das Sicherungselement 24 selbst ist bei 85 (siehe die Fig. 4 und 5) mittels einer Schnappverbindung am Kolben 14 befestigt. Hierfür ist die Aussparung 78 des Kolbens 14 im Aufnahmebereich 81 mit einander diametral gegenüberliegenden, seitlichen Öffnungen 86 versehen. Gemäß den Fig. 2 und 3 ist die Anordnung der Elemente in der Aussparung 78 des Kolbens 14 so getroffen, dass das Sicherungselement 24 hauptsächlich auf der vom Sensor 20 abgewandten Seite des Magneten 22 angeordnet ist.

Weitere Details des einstückig aus Kunststoff (z.B. Polyamid 6.6 mit 25% Glasfaseranteil) spritzgegossenen Sicherungselements 24 sind insbesondere den Fig. 13 bis 16 zu entnehmen. Demgemäß weist das Sicherungselement 24 einen Andruckfederarm 88 auf, der sich im am Kolben 14 montierten Zustand des Sicherungselements 24 (siehe insbesondere Fig. 3) im Wesentlichen in einer Richtung quer zur Axialrichtung erstreckt und eine dem Magneten 22 zugewandte Andruckfläche 89 besitzt, über die der Magnet 22 in der Axialrichtung gegen die Anlagefläche 26 andrückbar ist. Die Andruckfläche 89 ist im dargestellten Ausführungsbeispiel durch einen am freien Ende des Andruckfederarms 88 angeformten, dem Magneten 22 zugewandten nasenförmigen Vorsprung 90 ausgebildet.

Das Sicherungselement 24 hat ferner einen weiteren Andruckfederarm 92, der sich im am Kolben 14 montierten Zustand des Sicherungselements 24 im Wesentlichen in der Axialrichtung erstreckt und eine dem Magneten 22 zugewandte weitere Andruckfläche 93 besitzt. Über die weitere Andruckfläche 93, die im dargestellten Ausführungsbeispiel ebenfalls durch einen am freien Ende des weiteren Andruckfederarms 92 angeformten, dem Magneten 22 zugewandten nasenförmigen Vorsprung 94 ausgebildet ist, ist der Magnet 22 in der Richtung quer zur Axialrichtung gegen die weitere Anlagefläche 84 in der Aussparung 78 des Kolbens 14 andrückbar.

Das Sicherungselement 24 weist des Weiteren mindestens einen, im dargestellten Ausführungsbeispiel zwei Befestigungsfederarme 95 auf. Die Befestigungsfederarme 95 sind an ihren freien Enden jeweils mit einer Rastnase 96 versehen, die zur Ausbildung der Schnappverbindung 85 in bezüglich des weiteren Andruckfederarms 92 spiegelsymmetrischer Anordnung in die vorerwähnten, zugeordneten Öffnungen 86 des Kolbens 14 eingreifen, wie in Fig. 5 am besten zu erkennen ist.

Gemäß insbesondere den Fig. 13 und 15 ist das Sicherungselement 24 insgesamt in der Art eines Winkels ausgebildet. Hierbei erstreckt sich der Andruckfederarm 88 an einer Querseite des Grundkörpers 82 im Wesentlichen senkrecht vom Grundkörper 82 weg. Der weitere Andruckfederarm 92 hingegen ist an zentraler Stelle des Grundkörpers 82 ausgeformt. An zwei Längsseiten des Grundkörpers 82 schließlich ist je ein Befestigungsfederarm 95 der Schnappverbindung 85 ausgebildet. Es ist ersichtlich, dass damit die Befestigungsfederarme 95 des Sicherungselements 24 im Wesentlichen in einer Richtung federnd ausgebildet sind, die senkrecht zu sowohl der Axialrichtung, in welcher der Andruckfederarm 88 wirkt, als auch der Richtung quer zur Axialrichtung, in welcher der weitere Andruckfederarm 92 wirkt, verläuft.

In den Fig. 2, 3, 5, 7, 8 und 13 bis 16 ist weiterhin ein in der Draufsicht gesehen im Wesentlichen halbkreisförmiger Handhabungsabschnitt des Sicherungselements 24 mit 97 beziffert. Der Handhabungsabschnitt 97 erstreckt sich an der vorerwähnten Querseite des Grundkörpers 82 im Wesentlichen senkrecht zum Grundkörper 82 in einer zur Erstreckungsrichtung des Andruckfederarms 88 entgegengesetzten Richtung vom Grundkörper 82 weg. Bei der ggf. automatisierten Montage von Magnet 22 und Sicherungselement 24 am Kolben 14 dient der Handhabungsabschnitt 97 zum Führen des Sicherungselements 24 relativ zum Kolben 14 und als Krafteinleitungsfläche für die Montagekräfte.

Auf der Seite des Grundkörpers 82, auf der der weitere Andruckfederarm 92 gemäß Fig. 15 geringfügig aus der Ebene des Grundkörpers 82 ausgestellt ist und sich der nasenförmige Vorsprung 94 befindet, ist schließlich am freien Ende des Grundkörpers 82 mittig noch ein Orientierungsvorsprung 98 ausgebildet, der im montierten Zustand des Sicherungselements 24 zwischen den Stegen 79 in der Aussparung 78 aufgenommen ist. Dieser Orientierungsvorsprung 98 verhindert eine Falschmontage des Sicherungselements 24 im Aufnahmebereich 81 der Aussparung 78. Bei einem Versuch, das Sicherungselement 24 um 180° verdreht, mit einem dem Magneten 22 benachbart positionierten Handhabungsabschnitt 97 zu montieren, würde der Orientierungsvorsprung 98 nämlich an der Stirnseite des Kolbenfortsatzes 76 zur Anlage gelangen und somit ein Fügen des Sicherungselements 24 zum Aufnahmebereich 81 der Aussparung 78 verhindern.

Die Abfolge bei der Montage des Magneten 22 und des Sicherungselements 24 zum Kolben 14 ist in den Fig. 7 und 8 illustriert. Zunächst wird der Magnet 22 axial in den Aufnahmebereich 80 der Aussparung 78 im Kolbenfortsatz 76 eingeschoben, wobei der Magnet 22 an den Seitenflächen des Aufnahmebereichs 80 mit geringem Spiel geführt wird bis er in der Axialrichtung an der Anlagefläche 26 zur Anlage gelangt. Sodann wird das Sicherungselement 24 in den Aufnahmebereich 81 der Aussparung 78 eingeführt, wobei der Orientierungsvorsprung 98 zwischen den Stegen 79 des Kolbenfortsatzes 76 entlang gleitet und dabei das Sicherungselement 24, genauer dessen Grundkörper 82 in dem Aufnahmebereich 81 zentriert. Im Zuge dieser Bewegung kommt der weitere Andruckfederarm 92 mit seinem nasenförmigen Vorsprung 94 an dem Magneten 22 zur Anlage und federt von dem Magneten 22 weg, so dass der Magnet 22 über die weitere Andruckfläche 93 des Sicherungselements 24 gegen die weitere Anlagefläche 84 des Kolbens 14 in radialer Richtung vorgespannt wird. Bei der weiteren axialen Bewegung des Sicherungselements 24 relativ zum Kolben 14 kommen die Befestigungsfederarme 95 mit ihren Rastnasen 96 an den Seitenflächen des Aufnahmebereichs 81 zur Anlage und federn ein bzw. aufeinander zu. Sodann gelangt der Andruckfederarm 88 mit seinem nasenförmigen Vorsprung 90 an der Stirnseite des Magneten 22 zur Anlage. Da sich der Magnet 22 mit seiner gegenüberliegenden Stirnseite an der Anlagefläche 26 am Boden 74 des Kolbenaußenteils 34 abstützt, federt der Andruckfederarm 88 in den Fig. 2, 3, 7 und 8 nach links weg, so dass der Magnet 22 über die Andruckfläche 89 des Sicherungselements 24 gegen die Anlagefläche 26 des Kolbens 14 in axialer Richtung vorgespannt wird. Schließlich gelangen die Rastnasen 96 an den Befestigungsfederarmen 95 mit den zugeordneten Öffnungen 86 des Kolbenfortsatzes 76 in Überdeckung und rasten darin auseinander federnd ein. Im Ergebnis ist der Magnet 22 an definierter Stelle axial und radial spielfrei am Kolben 14 gehalten, so dass der Schaltpunkt bzw. Hub des Kolbens 14 mittels des Sensors 20 mit guter Signalstärke exakt zu erfassen ist.

Die Positionierung des Magneten 22 in Umfangsrichtung im Zylindergehäuse 12 erfolgt hierbei mittelbar über den Kolben 14 und das Zylindergehäuse 12. Genauer gesagt ist der Kolben 14 an seinem vom Druckraum 16 abgewandten Ende mit einem radial vorstehenden Ausrichtungsfortsatz 100 zur Drehwinkelorientierung im Zylindergehäuse 12 versehen, der in einer im Gehäuseeinsatz 30 innenumfangsseitig ausgebildeten Axialnut 102 eng geführt ist. Die Axialnut 102 erstreckt sich von der Ringschulter 56 des Gehäuseeinsatzes 30 bis zu dessen Ringaussparung 59, d.h. annähernd über die gesamte Länge des Gehäuseeinsatzes 30, wie am besten in Fig. 17 zu erkennen ist, so dass der Kolben 14 über den gesamten Kolbenhub gegen ein Verdrehen im Zylindergehäuse 12 gesichert ist.

Der Gehäuseeinsatz 30 wiederum ist mittels der Bajonettverbindung 54 dreh- und axialfest in einem Aufnahmeabschnitt 104 des Gehäusegrundkörpers 28 befestigt, der sich ausgehend von einem in Fig. 2 rechten, offenen Ende des Gehäusegrundkörpers 28 in Richtung des Druckraums 16 erstreckt. Zur Ausbildung der Bajonettverbindung 54 hat der Gehäuseeinsatz 30, wie am besten in den Fig. 17 bis 21 zu erkennen ist, auf gegenüberliegenden Seiten zwei radial vorstehende Kragenabschnitte 106, während der für den Gehäuseeinsatz 30 vorgesehene Aufnahmeabschnitt 104 des Gehäusegrundkörpers 28 gemäß Fig. 22 jeweils auf gegenüberliegenden Seiten zwei Fügeaussparungen 108 und zur axial engen Aufnahme der Kragenabschnitte 106 ausgebildete Hinterschneidungen 110 aufweist. Die Fügeaussparungen 108 gehen zum Einführen der Kragenabschnitte 106 von dem offenen Ende des Gehäusegrundkörpers 28 aus und enden mit den Hinterschneidungen 110 an einer umlaufenden Stufe 112 (siehe die Fig. 2 und 22), während die Hinterschneidungen 110 mit entsprechendem axialen Abstand zum offenen Ende des Gehäusegrundkörpers 28 zu den Fügeaussparungen 108 um 90° winkelversetzt angeordnet sind, so dass die über die Fügeaussparungen 108 des Gehäusegrundkörpers 28 eingeführten (vgl. Fig. 23) Kragenabschnitte 106 des Gehäuseeinsatzes 30 nach Anlage an der Stufe 112 des Gehäusegrundkörpers 28 (Position gemäß Fig. 24) durch Verdrehen des Gehäuseeinsatzes 30 um 90° um seine Längsachse im Gehäusegrundkörper 28 in die Hinterschneidungen 110 verschwenkbar sind (Stellung des Gehäuseeinsatzes 30 wie in Fig. 25 gezeigt), um den Gehäuseeinsatz 30 im Gehäusegrundkörper 28 axial festzulegen. Vor der Stufe 112, d.h. in Richtung des Druckraums 16 ist der Gehäuseeinsatz 30 hierbei - auch über den O-Ring 52 - radial eng im Gehäusegrundkörper 28 gehalten.

Zur Bajonettverbindung 54 ist insbesondere den Fig. 17 bis 27 weiterhin zu entnehmen, dass der Gehäusegrundkörper 28 an seinem offenen Ende eine stirnseitige Kontur 114 mit mindestens einem, im dargestellten Ausführungsbeispiel zwei diametral gegenüberliegenden, jeweils auf einen Rampenabschnitt 116 in Umfangsrichtung folgenden Rastabschnitten 118 aufweist, während der Gehäuseeinsatz 30 an seinem im montierten Zustand vom Druckraum 16 abgewandten Ende mindestens einen, hier zwei auf diametral gegenüberliegenden Seiten radial vorstehende, in Axialrichtung federnde Arme 120 hat. Die Arme 120 des Gehäuseeinsatzes 30 sind bei der Montage des Gehäuseeinsatzes 30 zum Gehäusegrundkörper 28 an der stirnseitigen Kontur 114 des Gehäusegrundkörpers 28 zur Anlage bringbar (vgl. Fig. 24), worauf die federnden Arme 120 durch Verdrehen des Gehäuseeinsatzes 30 im Gehäusegrundkörper 28 über den jeweils zugeordneten, in Umfangsrichtung gesehen zum jeweiligen Rastabschnitt 118 hin ansteigenden Rampenabschnitt 116 vorspannbar und nach Überfahren der Rampenabschnitte 116 im entsprechenden Rastabschnitt 118 einrastbar sind, um die Bajonettverbindung 54 mit im Gehäusegrundkörper 28 drehwinkelorientiertem Gehäuseeinsatz 30 zu verriegeln (Position gemäß den Fig. 1 mit 26, 2 mit 27 sowie 25). Den jeweiligen Rastabschnitt 118 in Umfangsrichtung gesehen zu beiden Seiten begrenzende Kanten 122 wirken sodann als Anschläge und verhindert ein weiteres Verdrehen wie auch ein Zurückdrehen des Gehäuseeinsatzes 30 relativ zum Gehäusegrundkörper 28. Wie weiterhin insbesondere die Fig. 19 und 20 zeigen, sind im dargestellten Ausführungsbeispiel die zwei Arme 120 des Gehäuseeinsatzes 30 winkelmäßig mit dessen Kragenabschnitten 106 und der längeren Achse der ovalen Öffnung 50 im Gehäuseeinsatz 30 ausgerichtet.

Details zum Sensor 20 der Sensoranordnung 18 sind schließlich noch den Fig. 2 und 3 zu entnehmen. Demgemäß weist der Sensor 20 eine Sensorplatine 124 mit einem darauf angeordneten Sensorelement 126 auf, hier in der Form eines Hallelements. Zur exakt positionierten Aufnahme der Sensorplatine 124 ist das Zylindergehäuse 12, genauer dessen Gehäusegrundkörper 28 mit einer Aussparung 128 versehen. Die im Wesentlichen rechteckige Aussparung 128 ist auf der vom Nachlaufanschluss 40 abgewandten Seite des Gehäusegrundkörpers 28 angeordnet und erstreckt sich ohne Verbindung zum Druckraum 16 im Zylindergehäuse 12 entlang des Druckraums 16, so dass sich während eines Hubs des Kolbens 14 der daran mittels des Sicherungselements 24 gehaltene Magnet 22 stets über der Aussparung 128 nahe der Sensorplatine 124 befindet. Zum dichten Verschließen der Aussparung 128 ist ein mit dem Elektroanschluss 46 versehener Deckel 130 aus Kunststoff vorgesehen, der randseitig umlaufend mit dem Gehäusegrundkörper 28 des Zylindergehäuses 12 dicht verschweißt ist, wie in Fig. 2 mit dem Bezugszeichen 132 angedeutet. Eine elektrische Kontaktierung der Sensorplatine 124 erfolgt bei 134 durch den Deckel 130 hindurch.

Ein Hydraulikzylinder, insbesondere Geberzylinder für eine hydraulische Kupplungs- oder Bremsbetätigung für Kraftfahrzeuge, hat ein Zylindergehäuse, in dem ein Kolben in einer Axialrichtung verschiebbar geführt ist, um einen Druckraum variabel zu begrenzen. Zur Erfassung einer Position und/oder eines Hubs des Kolbens in der Axialrichtung ist eine Sensoranordnung mit einem zylindergehäusefesten Sensor und einem damit zusammenwirkenden, am Kolben gehaltenen, stabartigen Magneten vorgesehen. Um den Magneten auf möglichst einfache und kostengünstige Art und Weise exakt am Kolben zu positionieren, ist der Magnet mittels eines am Kolben befestigten Sicherungselements gegen am Kolben ausgebildete Anlageflächen in der Axialrichtung und einer Richtung quer dazu federnd vorgespannt und somit in diesen Richtungen spielfrei am Kolben gehalten.

### BEZUGSZEICHENLISTE

- 10: Hydraulikzylinder / Geberzylinder
- 12: Zylindergehäuse
- 14: Kolben
- 16: Druckraum
- 18: Sensoranordnung
- 20: Sensor
- 22: Magnet
- 24: Sicherungselement
- 26: Anlagefläche
- 28: Gehäusegrundkörper
- 30: Gehäuseeinsatz
- 32: Kolbenstange
- 34: Kolbenaußenteil
- 36: Kolbeninnenteil
- 38: Druckanschluss
- 40: Nachlaufanschluss
- 42: Nachlaufbereich
- 44: Befestigungsflansch
- 46: Elektroanschluss
- 48: Kugelgelenkverbindung
- 50: ovale Öffnung
- 51: Radialnut
- 52: O-Ring
- 54: Bajonettverbindung
- 56: Ringschulter
- 58: Sekundärdichtelement
- 59: Ringaussparung
- 60: Stützring
- 62: Primärdichtelement
- 64: Ringaussparung
- 66: Lauffläche
- 68: Stirnnut
- 70: Axialnut
- 71: Schlitz
- 72: Axialnut
- 74: Boden
- 76: Kolbenfortsatz
- 78: Aussparung
- 79: Steg
- 80: Aufnahmebereich
- 81: Aufnahmebereich
- 82: Grundkörper
- 83: Längsschlitz
- 84: weitere Anlagefläche
- 85: Schnappverbindung
- 86: Öffnung
- 88: Andruckfederarm
- 89: Andruckfläche
- 90: nasenförmiger Vorsprung
- 92: weiterer Andruckfederarm
- 93: weitere Andruckfläche
- 94: nasenförmiger Vorsprung
- 95: Befestigungsfederarm
- 96: Rastnase
- 97: Handhabungsabschnitt
- 98: Orientierungsvorsprung
- 100: Ausrichtungsfortsatz
- 102: Axialnut
- 104: Aufnahmeabschnitt
- 106: Kragenabschnitt
- 108: Fügeaussparung
- 110: Hinterschneidung
- 112: Stufe
- 114: stirnseitige Kontur
- 116: Rampenabschnitt
- 118: Rastabschnitt
- 120: Arm
- 122: Kante
- 124: Sensorplatine
- 126: Sensorelement
- 128: Aussparung
- 130: Deckel
- 132: dichte Verschweißung
- 134: elektrische Kontaktierung

## Patentansprüche

1. Hydraulikzylinder (10), insbesondere Geberzylinder für eine hydraulische Kupplungs- oder Bremsbetätigung für Kraftfahrzeuge, mit einem Zylindergehäuse (12), in dem ein Kolben (14) in einer Axialrichtung verschiebbar geführt ist, um einen Druckraum (16) variabel zu begrenzen, wobei zur Erfassung einer Position und/oder eines Hubs des Kolbens (14) in der Axialrichtung eine Sensoranordnung (18) mit einem zylindergehäusefesten Sensor (20) und einem damit zusammenwirkenden, am Kolben (14) gehaltenen, stabartigen Magneten (22) vorgesehen ist, **dadurch gekennzeichnet, dass** am Kolben (14) ein Sicherungselement (24) befestigt ist, das den Magneten (22) sowohl in der Axialrichtung gegen eine am Kolben (14) ausgebildete Anlagefläche (26) als auch in einer Richtung quer zur Axialrichtung gegen eine ebenfalls am Kolben (14) ausgebildete weitere Anlagefläche (84) federnd vorspannt, so dass der Magnet (22) in der Axialrichtung und auch in der Richtung quer zur Axialrichtung spielfrei am Kolben (14) gehalten ist.

2. Hydraulikzylinder (10) nach Anspruch 1, **dadurch gekennzeichnet, dass** das Sicherungselement (24) einen Andruckfederarm (88) aufweist, der sich im Wesentlichen in der Richtung quer zur Axialrichtung erstreckt und eine dem Magneten (22) zugewandte Andruckfläche (89) besitzt, über die der Magnet (22) in der Axialrichtung gegen die Anlagefläche (26) andrückbar ist.

3. Hydraulikzylinder (10) nach Anspruch 1 oder 2, **dadurch gekennzeichnet, dass** das Sicherungselement (24) einen weiteren Andruckfederarm (92) aufweist, der sich im Wesentlichen in der Axialrichtung erstreckt und eine dem Magneten (22) zugewandte weitere Andruckfläche (93) besitzt, über die der Magnet (22) in der Richtung quer zur Axialrichtung gegen die weitere Anlagefläche (84) andrückbar ist.

4. Hydraulikzylinder (10) nach einem der vorhergehenden Ansprüche, **dadurch gekennzeichnet, dass** das Sicherungselement (24) mittels einer Schnappverbindung (85) am Kolben (14) befestigt ist.

5. Hydraulikzylinder (10) nach Anspruch 4, **dadurch gekennzeichnet, dass** das Sicherungselement (24) mindestens einen Befestigungsfederarm (95) aufweist, der mit einer Rastnase (96) versehen ist, die zur Ausbildung der Schnappverbindung (85) in einer zugeordneten Öffnung (86) des Kolbens (14) eingreift.

6. Hydraulikzylinder (10) nach den Ansprüchen 1 bis 5, **dadurch gekennzeichnet, dass** der mindestens eine Befestigungsfederarm (95) des Sicherungselements (24) im Wesentlichen in einer Richtung federnd ausgebildet ist, die senkrecht zu sowohl der Axialrichtung, in welcher der Andruckfederarm (88) wirkt, als auch der Richtung quer zur Axialrichtung, in welcher der weitere Andruckfederarm (92) wirkt, verläuft.

7. Hydraulikzylinder (10) nach Anspruch 5 oder 6, **dadurch gekennzeichnet, dass** der Kolben (14) zur Aufnahme sowohl des Magneten (22) als auch des Sicherungselements (24) eine Aussparung (78) aufweist, in der die Anlagefläche (26) und die weitere Anlagefläche (84) für den Magneten (22) sowie die Öffnung (86), in der die Rastnase (96) des mindestens einen Befestigungsfederarms (95) eingreift, ausgebildet sind, wobei das Sicherungselement (24) hauptsächlich auf der vom Sensor (20) abgewandten Seite des Magneten (22) angeordnet ist.

8. Hydraulikzylinder (10) nach wenigstens den Ansprüchen 1 bis 5, **dadurch gekennzeichnet, dass** das Sicherungselement (24) in der Art eines Winkels ausgebildet ist, mit einem im Wesentlichen quaderförmigen Grundkörper (82), von dem sich an einer Querseite der Andruckfederarm (88) im Wesentlichen senkrecht wegerstreckt, wobei der weitere Andruckfederarm (92) an zentraler Stelle des Grundkörpers (82) ausgeformt ist, während an zwei Längsseiten des Grundkörpers (82) je ein Befestigungsfederarm (95) der Schnappverbindung (85) ausgebildet ist.

9. Hydraulikzylinder (10) nach Anspruch 8, **dadurch gekennzeichnet, dass** das Sicherungselement (24) einen Handhabungsabschnitt (97) hat, der sich an der Querseite des Grundkörpers (82) im Wesentlichen senkrecht zum Grundkörper (82) in einer zur Erstreckungsrichtung des Andruckfederarms (88) entgegengesetzten Richtung wegerstreckt.

10. Hydraulikzylinder (10) nach einem der vorhergehenden Ansprüche, **dadurch gekennzeichnet, dass** das Zylindergehäuse (12) einen den Druckraum (16) begrenzenden Gehäusegrundkörper (28) und einen Gehäuseeinsatz (30) umfasst, über den der Kolben (14) im Zylindergehäuse (12) längsverschieblich geführt und gegen ein Verdrehen gesichert ist, wobei der Gehäuseeinsatz (30) mittels einer Bajonettverbindung (54) dreh- und axialfest in einem Aufnahmeabschnitt (104) des Gehäusegrundkörpers (28) befestigt ist, der sich ausgehend von einem offenen Ende des Gehäusegrundkörpers (28) in Richtung des Druckraums (16) erstreckt.

11. Hydraulikzylinder (10) nach Anspruch 10, **dadurch gekennzeichnet, dass** der Kolben (14) an seinem vom Druckraum (16) abgewandten Ende einen radial vorstehenden Ausrichtungsfortsatz (100) zur Drehwinkelorientierung im Zylindergehäuse (12) aufweist, der in einer im Gehäuseeinsatz (30) ausgebildeten Axialnut (102) eng geführt ist.

12. Hydraulikzylinder (10) nach Anspruch 10 oder 11, **dadurch gekennzeichnet, dass** zur Ausbildung der Bajonettverbindung (54) der Gehäuseeinsatz (30) radial vorstehende Kragenabschnitte (106) hat, während der Aufnahmeabschnitt (104) des Gehäusegrundkörpers (28) für den Gehäuseeinsatz (30) Fügeaussparungen (108) und zur engen Aufnahme der Kragenabschnitte (106) ausgebildete Hinterschneidungen (110) aufweist, wobei die Fügeaussparungen (108) zum Einführen der Kragenabschnitte (106) von dem offenen Ende des Gehäusegrundkörpers (28) ausgehen und die Hinterschneidungen (110) mit axialem Abstand zum offenen Ende zu den Fügeaussparungen (108) winkelversetzt angeordnet sind, so dass die über die Fügeaussparungen (108) eingeführten Kragenabschnitte (106) durch Verdrehen des Gehäuseeinsatzes (30) im Gehäusegrundkörper (28) in die Hinterschneidungen (110) verschwenkbar sind, um den Gehäuseeinsatz (30) im Gehäusegrundkörper (28) axial festzulegen.

13. Hydraulikzylinder (10) nach einem der Ansprüche 10 bis 12, **dadurch gekennzeichnet, dass** der Gehäusegrundkörper (28) an seinem offenen Ende eine stirnseitige Kontur (114) mit mindestens einem auf einen Rampenabschnitt (116) in Umfangsrichtung folgenden Rastabschnitt (118) aufweist, während der Gehäuseeinsatz (30) an seinem vom Druckraum (16) abgewandten Ende mindestens einen radial vorstehenden, in der Axialrichtung federnden Arm (120) hat, der bei der Montage des Gehäuseeinsatzes (30) zum Gehäusegrundkörper (28) an der stirnseitigen Kontur (114) zur Anlage bringbar ist, worauf der federnde Arm (120) durch Verdrehen des Gehäuseeinsatzes (30) im Gehäusegrundkörper (28) über den Rampenabschnitt (116) vorspannbar und nach Überfahren des Rampenabschnitts (116) im Rastabschnitt (118) einrastbar ist, um die Bajonettverbindung (54) mit im Gehäusegrundkörper (28) drehwinkelorientiertem Gehäuseeinsatz (30) zu verriegeln.

14. Hydraulikzylinder (10) nach einem der vorhergehenden Ansprüche, **dadurch gekennzeichnet, dass** der Sensor (20) eine Sensorplatine (124) mit einem darauf angeordneten Sensorelement (126) aufweist, wobei das Zylindergehäuse (12) zur exakt positionierten Aufnahme der Sensorplatine (124) mit einer Aussparung (128) versehen ist, die mittels eines Deckels (130) dicht verschlossen ist, durch den hindurch eine elektrische Kontaktierung (134) der Sensorplatine (124) erfolgt.

## Claims

1. Hydraulic cylinder (10), particularly master cylinder for a hydraulic clutch or brake actuation for motor vehicles, comprising a cylinder housing (12), in which a piston (14) is guided to be displaceable in an axial direction so as to variably bound a pressure chamber (16), wherein a sensor arrangement (18) with a sensor (20) fixed relative to the cylinder housing and a rod-like magnet (22) co-operating with the sensor and held at the piston (14) is provided for detecting a position and/or stroke of the piston (14) in the axial direction, **characterized in that** a securing element (24) is attached to the piston (14) and resiliently biases the magnet (22) in both the axial direction against a contact surface (26) formed at the piston (14) and a direction transverse to the axial direction against a further contact surface (84) similarly formed at the piston (14) so that the magnet (22) is held at the piston (14) free of play in the axial direction and also in the direction transverse to the axial direction.

2. Hydraulic cylinder (10) according to claim 1, **characterized in that** the securing element (24) comprises a pressing spring arm (88) extending substantially in the direction transverse to the axial direction and having a pressing surface (89) which faces the magnet (22) and by way of which the magnet (22) can be pressed in the axial direction against the contact surface (26).

3. Hydraulic cylinder (10) according to claim 1 or 2, **characterized in that** the securing element (24) has a further pressing spring arm (92) extending substantially in the axial direction and having a further pressing surface (93) which faces the magnet (22) and by way of which the magnet (22) can be pressed in the direction transverse to the axial direction against the further contact surface (84).

4. Hydraulic cylinder (10) according to any one of the preceding claims, **characterized in that** the securing element (24) is attached to the piston (14) by means of a snap connection (85).

5. Hydraulic cylinder (10) according to claim 4, **characterized in that** the securing element (24) has at least one fastening spring arm (95) provided with a detent lug (96) which engages in an associated opening (86) of the piston (14) so as to form the snap connection (85).

6. Hydraulic cylinder (10) according to claims 1 to 5, **characterized in that** the at least one fastening spring arm (95) of the securing element (24) is formed to be resilient substantially in a direction extending perpendicularly not only to the axial direction in which the pressing spring arm (88) acts, but also the direction transverse to the axial direction in which the further pressing spring arm (92) acts.

7. Hydraulic cylinder (10) according to claim 5 or 6, **characterized in that** for reception of both the magnet (22) and the securing element (24) the piston (14) has a recess (78) in which the contact surface (26) and the further contact surface (84) for the magnet (22) and the opening (86) in which the detent lug (96) of the at least one fastening spring arm (95) engages are formed, wherein the securing element (24) is arranged principally on the side of the magnet (22) remote from the sensor (20).

8. Hydraulic cylinder (10) according to at least claims 1 to 5, **characterized in that** the securing element (24) is constructed in the form of an angle with a substantially block-shaped base body (82) from which at a transverse side the pressing spring arm (88) extends substantially perpendicularly away, wherein the further pressing spring arm (92) is formed at a central point of the base body (82), whereas a respective fastening spring arm (95) of the snap connection (85) is formed at each of two longitudinal sides of the base body (82).

9. Hydraulic cylinder (10) according to claim 8, **characterized in that** the securing element (24) has a handle section (97) which at the transverse side of the base body (82) extends substantially perpendicularly to the base body (82) in a direction opposite to the direction of extension of the pressing spring arm (88).

10. Hydraulic cylinder (10) according to any one of the preceding claims, **characterized in that** the cylinder housing (12) comprises a housing base body (28) bounding the pressure chamber (16) and a housing insert (30) by way of which the piston (14) is guided in the cylinder housing (12) to be longitudinally displaceable and to be secured against rotation, wherein the housing insert (30) is attached by means of a bayonet connection (54) in a receiving section (104) of the housing base body (28) to be rotationally and axially fixed, which receiving section extends in the direction of the pressure chamber (16) starting from an open end of the housing base body (28).

11. Hydraulic cylinder (10) according to claim 10, **characterized in that** the piston (14) at its end remote from the pressure chamber (16) has a radially protruding alignment projection (100) which for rotational angle orientation in the cylinder housing (12) is tightly guided in an axial groove (102) formed in the housing insert (30).

12. Hydraulic cylinder (10) according to claim 10 or 11, **characterized in that** for forming the bayonet connection (54) the housing insert (30) has radially projecting collar sections (106) and the receiving section (104) of the housing base body (28) for the housing insert (30) has joining recesses (108) and undercuts (110) formed for tight reception of the collar sections (106), wherein the joining recesses (108) for introduction of the collar sections (106) extend from the open end of the housing base body (28) and the undercuts (110) are arranged at an axial spacing from the open end to be angularly offset relative to the joining recesses (108) so that the collar sections (106) introduced by way of the joining recesses (108) are pivotable into the undercuts (110) by turning the housing insert (30) in the housing base body (28), so as to axially fix the housing insert (30) in the housing base body (28) .

13. Hydraulic cylinder (10) according to any one of claims 10 to 12, **characterized in that** the housing base body (28) has at the open end thereof an end contour (114) with at least one detent section (118) following a ramp section (116) in circumferential direction, whereas the housing insert (30) has at its end remote from the pressure chamber (16) at least one radially projecting arm (120) which is resilient in the axial direction and which during assembly of the housing insert (30) to the housing base body (28) can be brought into contact with the end contour (114), whereupon the resilient arm (120) can be biased by way of the ramp section (116) through turning the housing insert (30) in the housing base body (28) and after travelling past the ramp section (116) can detent in the detent section (118) so as to lock the bayonet connection (54) with the housing insert (30) oriented in rotational angle in the housing base body (28).

14. Hydraulic cylinder (10) according to any one of the preceding claims, **characterized in that** the sensor (20) comprises a sensor circuit board (124) with a sensor element (126) arranged thereon, wherein for precisely positioned mounting of the sensor circuit board (124) the cylinder housing (12) is provided with a recess (128), which is tightly closed by means of a cover (130) through which electrical contact (134) with the sensor circuit board (124) takes place.

## Revendications

1. Cylindre hydraulique (10), en particulier maître-cylindre pour un actionnement hydraulique d'embrayage ou de frein pour véhicules automobiles, avec un boîtier de cylindre (12), dans lequel un piston (14) est guidé de manière déplaçable dans une direction axiale, pour délimiter de manière variable une chambre de pression (16), où un agencement de capteur (18) avec un capteur (20) solidaire du boîtier de cylindre et un aimant en forme de tige (22) coopérant avec celui-ci, maintenu sur le piston (14) est prévu pour détecter une position et/ou une course du piston (14) dans la direction axiale, **caractérisé en ce qu'**un élément d'arrêt (24) est fixé au piston (14), qui sollicite élastiquement l'aimant (22) à la fois dans la direction axiale contre une surface de contact (26) formée sur le piston (14) et aussi dans une direction transversale à la direction axiale contre une autre surface de contact (84) également formée sur le piston (14), de sorte que l'aimant (22) est maintenu sans jeu sur le piston (14) dans la direction axiale et également dans la direction transversale à la direction axiale.

2. Cylindre hydraulique (10) selon la revendication 1, **caractérisé en ce que** l'élément d'arrêt (24) présente un bras de ressort de pression (88) qui s'étend sensiblement dans la direction transversale à la direction axiale et possède une surface de pression (89) tournée vers l'aimant (22), par l'intermédiaire de laquelle l'aimant (22) peut être pressé dans la direction axiale contre la surface de contact (26).

3. Cylindre hydraulique (10) selon la revendication 1 ou 2, **caractérisé en ce que** l'élément d'arrêt (24) présente un autre bras de ressort de pression (92) qui s'étend sensiblement dans la direction axiale et possède une autre surface de pression (93) tournée vers l'aimant (22), par l'intermédiaire de laquelle l'aimant (22) peut être pressé contre l'autre surface de contact (84) dans la direction transversale à la direction axiale.

4. Cylindre hydraulique (10) selon l'une des revendications précédentes, **caractérisé en ce que** l'élément d'arrêt (24) est fixé au piston (14) au moyen d'une liaison par encliquetage (85).

5. Cylindre hydraulique (10) selon la revendication 4, **caractérisé en ce que** l'élément d'arrêt (24) présente au moins un bras de ressort de fixation (95) qui est pourvu d'une patte de verrouillage (96) qui, pour former la liaison par encliquetage (85), s'engage dans une ouverture (86) du piston (14) associée.

6. Cylindre hydraulique (10) selon les revendications 1 à 5, **caractérisé en ce que** le au moins un bras de ressort de fixation (95) de l'élément d'arrêt (24) est conçu de manière élastique sensiblement dans une direction qui s'étend perpendiculairement à la fois à la direction axiale dans laquelle agit le bras de ressort de pression (88) et aussi à la direction transversale à la direction axiale dans laquelle agit l'autre bras de ressort de pression (92).

7. Cylindre hydraulique (10) selon la revendication 5 ou 6, **caractérisé en ce que** le piston (14), pour recevoir à la fois l'aimant (22) et l'élément d'arrêt (24), présente un évidement (78) dans lequel sont formées la surface de contact (26) et l'autre surface de contact (84) pour l'aimant (22) ainsi que l'ouverture (86) dans laquelle la patte de verrouillage (96) du au moins un bras de ressort de fixation (95) s'engage, où l'élément d'arrêt (24) est disposé principalement du côté de l'aimant (22) opposé au capteur (20).

8. Cylindre hydraulique (10) selon au moins les revendications 1 à 5, **caractérisé en ce que** l'élément d'arrêt (24) est conçu à la manière d'un angle, avec un corps de base (82) sensiblement parallélépipédique à partir duquel le bras de ressort de pression (88) s'étend sensiblement perpendiculairement sur un côté transversal, où l'autre bras de ressort de pression (92) est formé en position centrale du corps de base (82), tandis qu'un bras de ressort de fixation (95) de la liaison par encliquetage (85) est formé sur chacun des deux grands côtés du corps de base (82).

9. Cylindre hydraulique (10) selon la revendication 8, **caractérisé en ce que** l'élément d'arrêt (24) a une section de manutention (97) qui s'étend dans une direction opposée à la direction d'extension du bras de ressort de pression (88) du côté transversal du corps de base (82) sensiblement perpendiculairement au corps de base (82).

10. Cylindre hydraulique (10) selon l'une des revendications précédentes, **caractérisé en ce que** le boîtier de cylindre (12) comprend un corps de base de boîtier (28) délimitant la chambre de pression (16) et un insert de boîtier (30) par le biais duquel le piston (14) est guidé de manière déplaçable longitudinalement dans le boîtier de cylindre (12) et est protégé contre une torsion, où l'insert de boîtier (30) est fixé de manière fixe en rotation et axiale au moyen d'une liaison à baïonnette (54) dans une section de réception (104) du corps de base de boîtier (28), qui s'étend depuis une extrémité ouverte du corps de base de boîtier (28) dans la direction de la chambre de pression (16).

11. Cylindre hydraulique (10) selon la revendication 10, **caractérisé en ce que** le piston (14) présente à son extrémité opposée à la chambre de pression (16) un prolongement d'alignement (100) en saillie radiale pour l'orientation de l'angle de rotation dans le boîtier de cylindre (12), qui est guidée étroitement dans une rainure axiale (102) formée dans l'insert de boîtier (30).

12. Cylindre hydraulique (10) selon la revendication 10 ou 11, **caractérisé en ce que** pour former la liaison à baïonnette (54) l'insert de boîtier (30) a des sections de collier (106) faisant saillie radialement, tandis que la section de réception (104) du corps de base de boîtier (28) présente pour l'insert de boîtier (30) des évidements d'assemblage (108) et pour recevoir étroitement les sections de collier (106) des contre-dépouilles (110) formées, où les évidements d'assemblage (108) pour insérer les sections de collier (106) partent de l'extrémité ouverte du corps de base du boîtier (28) et les contre-dépouilles (110) sont disposées avec une distance axiale de l'extrémité ouverte décalées angulairement des évidements d'assemblage (108), de sorte que les sections de collier (106) introduites par le biais des évidements d'assemblage (108) peuvent être amenées à pivoter dans les contre-dépouilles (110) par rotation de l'insert de boîtier (30) dans le corps de base de boîtier (28) pour fixer axialement l'insert de boîtier (30) dans le corps de base de boîtier (28).

13. Cylindre hydraulique (10) selon l'une des revendications 10 à 12, **caractérisé en ce que** le corps de base de boîtier (28) présente à son extrémité ouverte un contour du côté frontal (114) avec au moins une section de verrouillage (118) suivant une section de rampe (116) dans la direction circonférentielle, tandis que l'insert de boîtier (30) a à son extrémité opposée à la chambre de pression (16) au moins un bras (120) faisant saillie radialement, élastique dans la direction axiale, qui, lors du montage de l'insert de boîtier (30) sur le corps de base de boîtier (28), peut être amené en contact avec le contour du côté frontal (114), après quoi le bras élastique (120) peut être préchargé par rotation de l'insert de boîtier (30) dans le corps de base de boîtier (28) sur la section de rampe (116) et peut être verrouillé dans la section de verrouillage (118) après franchissement de la section de rampe (116) pour verrouiller la liaison à baïonnette (54) avec l'insert de boîtier (30) orienté concernant l'angle de rotation dans le corps de base du boîtier (28).

14. Cylindre hydraulique (10) selon l'une des revendications précédentes, **caractérisé en ce que** le capteur (20) présente une carte de capteur (124) avec un élément capteur (126) disposé dessus, où le boîtier de cylindre (12), pour la réception positionnée exactement de la carte de capteur (124), est pourvu d'un évidement (128) qui est fermé hermétiquement au moyen d'un couvercle (130), à travers lequel s'effectue une mise en contact électrique (134) de la carte de capteur (124).
